# EUROPEAN PATENT APPLICATION

(11) **EP 4 365 258 A1**
(43) Date of publication of application: **08.05.2024**
(21) Application number: 22833282.1
(22) Date of filing: 30.06.2022
(51) Int. Cl.: C09K 3/00

(54) **HEAVY METAL TREATMENT AGENT, AND METHOD FOR TREATING INCINERATED ASH AND WASTEWATER USING SAME**

(30) Priority: 02.07.2021 JP 2021110447
(71) Applicant: Miyoshi Oil & Fat Co., Ltd., Tokyo 124-8510 (JP)
(72) Inventor: TERADA Kazuhiro, Tokyo 124-8510 (JP); TAKAMATSU Yuichiro, Tokyo 124-8510 (JP); KAWAI Koji, Tokyo 124-8510 (JP)
(74) Representative: Angerhausen, Christoph
(86) International application number: PCT/JP2022/026239
(87) International publication number: WO 2023/277136

(57) **Abstract**

Provided are: a novel heavy metal treatment agent having improved performance for treating elements of groups 6-16 of the periodic table or compounds thereof, including treatment of incinerated ash and wastewater, etc.; and a method for treating incinerated ash and wastewater using the heavy metal treatment agent. This heavy metal treatment agent includes at least one dithiocarbamate of one or more amine compounds represented by any of formulae (I) to (III): 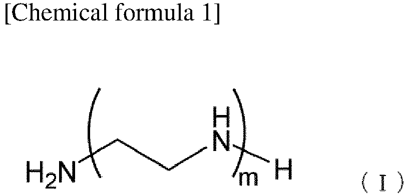 wherein m represents an integer of 3 to 6; 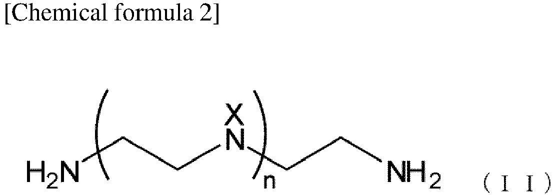 wherein each of the n Xs independently represents a hydrogen atom or a 2-aminoethyl group, at least one X is a 2-aminoethyl group, n is an integer of 1 to 3 and the total number of nitrogen atoms is 4 to 8; and 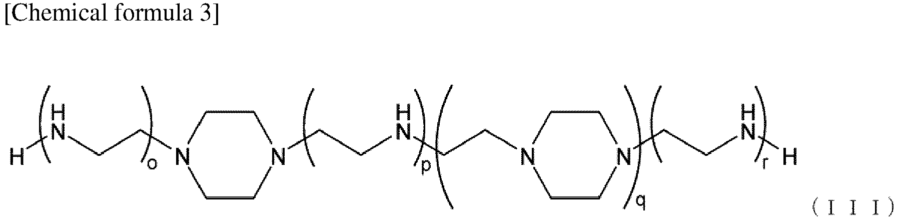 wherein o is an integer of 0 to 2, p is 0 or 1, q is 0 or 1, r is an integer of 0 to 3, the sum of o, p and r is greater than or equal to 1, and the total number of nitrogen atoms is 3 to 7.

## Description

### TECHNICAL FIELD

The present invention relates to a heavy metal treatment agent.

### BACKGROUND ART

Incinerated ash (such as Fly Ash (FA) and Bottom Ash (BA)) resulting from waste incineration of, for example, municipal and industrial wastes may contain heavy metals that are harmful to the human body. Specifically, the fly ash generated at municipal waste incineration plants during waste incineration contains heavy metals. Leaching of these heavy metals into groundwater, rivers or seawater can cause serious environmental contamination. Therefore, fly ash necessitates mandatory intermediate treatment such as chemical treatment since that is a specially controlled domestic waste. Fly ash containing heavy metals can leak heavy metals after landfilling due to, for example, rainwater. As a result, heavy metals are solidified within the fly ash to decrease elution, which is a typical practice. Chemical treatment is a process that involves the mixing of a chemical agent, water and fly ash to solidify harmful heavy metals. Examples of such agents used for this purpose include organic chelators such as dithiocarbamate and inorganic agents such as iron compounds.

Various treatments are carried out to collect and separate heavy metals from wastewater, such as those from industrial or factory wastewater to, for example, purify or detoxify the water or to reuse these heavy metals. Conventional methods known for removing metals from, for example, wastewater include, for example, neutralizing coagulation precipitation, ion flotation, ion exchange, electrolytic floatation, electrodialysis, adsorption, and reverse osmosis. However, neutralizing coagulation precipitation presents challenges such as inadequate floc formation and an issue relating to workability that requires the processing of a significant quantity of metallic hydroxide sludge that has been generated, an issue that a metallic ion can be re-eluted from the disposed sludge into, for example, rivers or seawater to thereby cause secondary pollution, and an issue that it is not easy to maintain a wastewater's metallic ion concentration below a predetermined threshold that is set by the nation. Further, ion flotation, ion exchange, electrolytic floatation, electrodialysis, adsorption and reverse osmosis all pose challenges such as metal removal inefficiency, operational issues and high running costs. Consequently, in place of these approaches, an approach of collecting and removing the metals in wastewater using a metal recovery agent such as an organic chelator has been widely used.

Dithiocarbamates derived from amine compounds such as ethylenediamine, diethylenetriamine and piperazine, have traditionally served as heavy metal treatment agents (Metal recovery agents) for treating heavy metals in incinerated ash (Fly ash and Bottom ash) and wastewater (Patent documents 1 and 2).

### PRIOR ART DOCUMENTS

### Patent documents

Patent document 1: JP-A-H6-79254
Patent document 2: JP-A-H8-224560

### SUMMARY OF THE INVENTION

### Problems to be solved by the invention

However, in conventional technologies, there has been desired further improvement in heavy metal treatment capability, particularly in the case of incinerated ash treatment, an improvement in elution reduction from incinerated ash, and in the case of wastewater treatment, an improvement in heavy metal recovering efficiency and floc formation capability.

The present invention has been made in view of these circumstances, and intends to provide a novel heavy metal treatment agent having improved performance for treating elements of groups 6 to 16 of the periodic table or compounds thereof, including treatment of incinerated ash and wastewater, etc.; and a method for treating incinerated ash and wastewater using the heavy metal treatment agent.

### Means to solve the problems

In order to solve the above problems, the inventions as set forth in the following will be disclosed.
[1] A heavy metal treatment agent comprising at least one dithiocarbamate of one or more amine compounds represented by any of formulae (I) to (III): 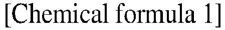 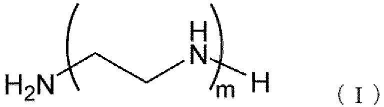
   wherein m represents an integer of 3 to 6; 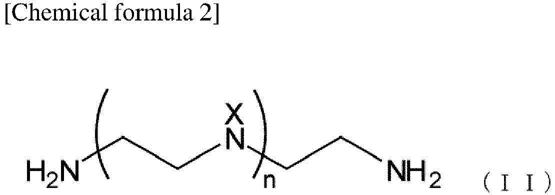
   wherein each of the n Xs independently represents a hydrogen atom or a 2-aminoethyl group, at least one X is a 2-aminoethyl group, n is an integer of 1 to 3 and the total number of nitrogen atoms is 4 to 8; and 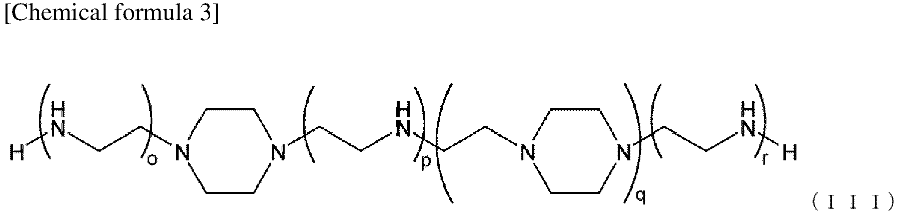
   wherein o is an integer of 0 to 2, p is 0 or 1, q is 0 or 1, r is an integer of 0 to 3, the sum of o, p and r is greater than or equal to 1, and the total number of nitrogen atoms is 3 to 7.
[2] The heavy metal treatment agent according to [1], wherein the one or more amine compounds comprise an amine compound represented by the formula (III).
[3] The heavy metal treatment agent according to [2], wherein the one or more amine compounds comprise, as an amine compound represented by the formula (III), at least one species selected from amine compounds represented by the following formulae (IIIa), (IIIb) and (IIIc): 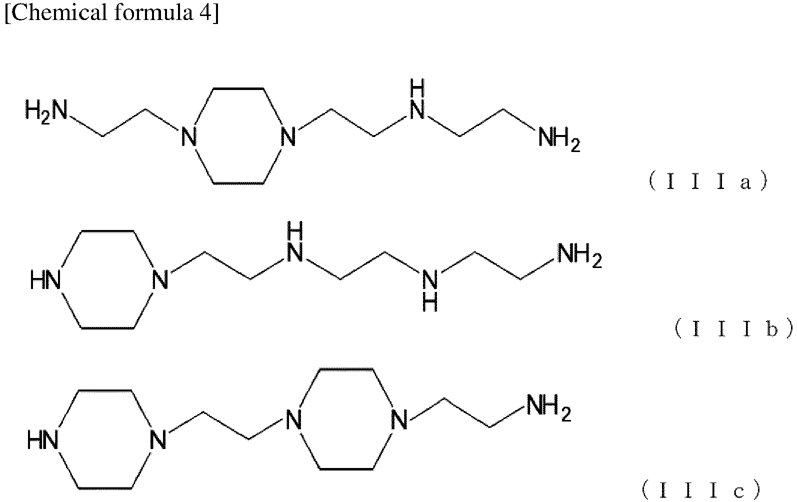
[4] The heavy metal treatment agent according to [2] or [3], wherein the one or more amine compounds comprise, as amine compounds represented by the formula (III), both of the amine compounds represented by the following formulae (IIIa) and (IIIb): 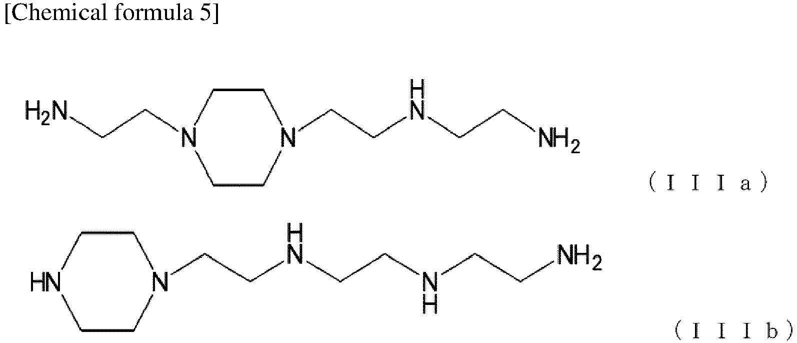
[5] The heavy metal treatment agent according to [4], wherein the one or more amine compounds further comprise, as an amine compound represented by the formula (III), an amine compound represented by the following formula (IIIc): 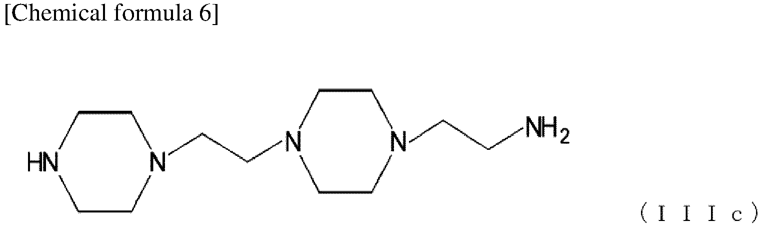
[6] The heavy metal treatment agent according to any one of [1] to [5], wherein the one or more amine compounds comprise all of the amine compounds represented by the formulae (I) to (III).
[7] The heavy metal treatment agent according to [6], wherein the one or more amine compounds comprise, as amine compounds represented by any of formulae (I) to (III), all of the amine compounds represented by the following formulae (Ia), (IIa), (IIIa) and (IIIb). 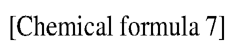 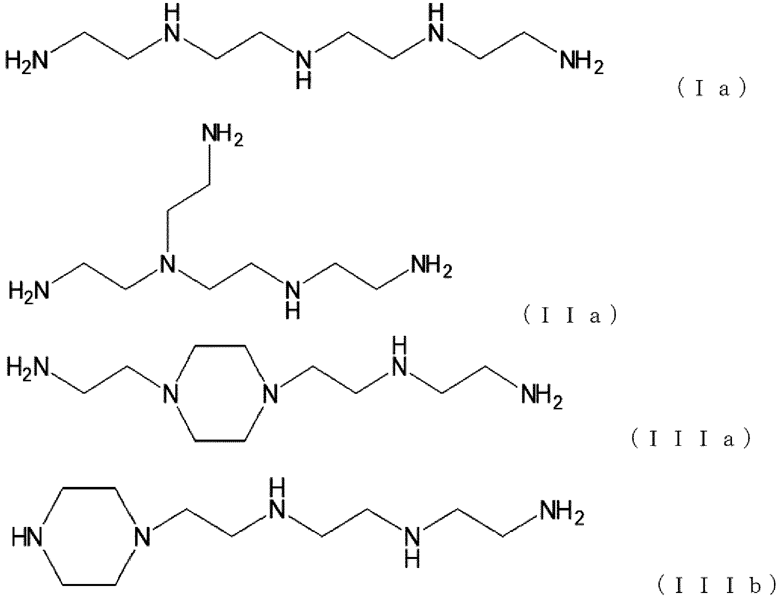
[8] The heavy metal treatment agent according to [7], wherein the one or more amine compounds further comprise, as an amine compound represented by the formula (III), an amine compound represented by the following formula (IIIc): 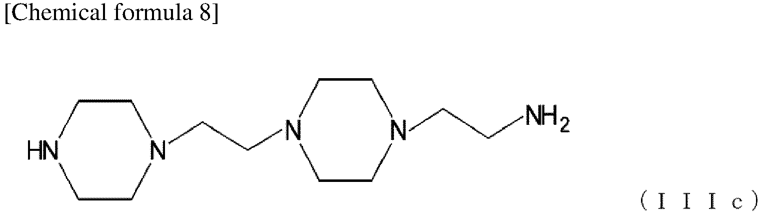
[9] The heavy metal treatment agent according to any one of [1] to [8], wherein the one or more amine compounds comprise an amine compound represented by the formula (III) in an amount of 10.0% or more and 80.0% or less.
[10] The heavy metal treatment agent according to any one of [1] to [9], wherein the one or more amine compounds comprise, as amine compounds represented by the formula (III), both of the amine compounds represented by the following formulae (IIIa) and (IIIb): 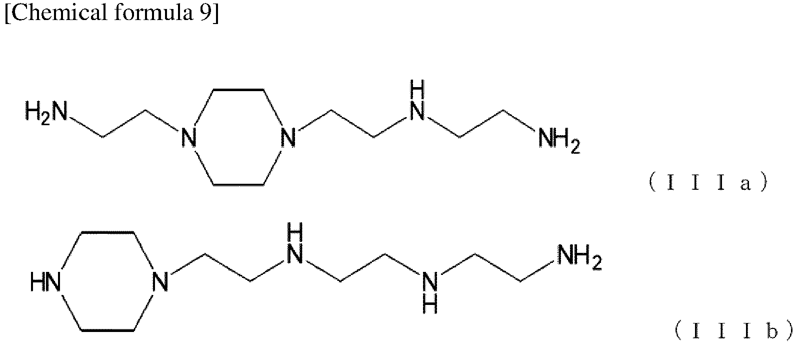 wherein the total amount of the amine compounds represented by the formulae (IIIa) and (IIIb) is 10.0% or more and 50.0% or less.
[11] The heavy metal treatment agent according to any one of [1] to [10], wherein the one or more amine compounds comprise an amine compound represented by the formula (II) in an amount of 5.0% or more and 30.0% or less.
[12] The heavy metal treatment agent according to any one of [1] to [11], wherein the dithiocarbamate is a sodium salt of dithiocarbamate.
[13] The heavy metal treatment agent according to any one of [1] to [12], wherein the heavy metal treatment agent is for treating elements of groups 6 to 16 of the periodic table or compounds thereof.
[14] A method for treating incinerated ash containing any one or more elements of groups 6, 12 and 14 of the periodic table or compounds thereof, wherein the method comprises the step of adding the heavy metal treatment agent according to any one of [1] to [13] into the incinerated ash.
[15] The method for treating incinerated ash according to [14], wherein an eluate of the incinerated ash of the experiment as set forth in Japan Environment Agency Notification No. 13 has a pH of 11.5 or more.
[16] A method for treating wastewater containing any one or more elements of groups 6 to 16 of the periodic table or compounds thereof, wherein the method comprises the step of adding: the heavy metal treatment agent according to any one of [1] to [13]; and an iron-based inorganic flocculant and/or an aluminium-based inorganic flocculant into a subject water solution.
[17] A method for treating wastewater containing any one or more elements of groups 6 to 16 of the periodic table or compounds thereof, wherein the method comprises the step of adding: the heavy metal treatment agent according to any one of [1] to [13]; and a polymer flocculant into a subject water solution.
[18] A method for treating wastewater containing any one or more elements of groups 6 to 16 of the periodic table or compounds thereof, wherein the method comprises the step of adding: the heavy metal treatment agent according to any one of [1] to [13]; a polymer flocculant; and an iron-based inorganic flocculant and/or an aluminium-based inorganic flocculant into a subject water solution.

### Effects of the invention

The present invention provides a novel heavy metal treatment agent for treating, for example, incinerated ash and wastewater, and the agent has an improved capability of treating elements of groups 6 to 16 of the periodic table or compounds thereof, particularly in the case of incinerated ash treatment, the agent has an improved elution reduction property of reducing heavy metal elution from incinerated ash, and in the case of wastewater treatment, the agent has an improved heavy metal recovering efficiency and floc formation capability. Further, according to the method for treating incinerated ash containing any elements of groups 6 to 16 of the periodic table or compounds thereof, this novel heavy metal treatment agent may be used to provide a method for treating incinerated ash that provides an improved heavy metal elution reduction capability from the incinerated ash. According to the method for treating wastewater containing any elements of groups 6 to 16 of the periodic table or compounds thereof, this novel heavy metal treatment agent as well as a flocculant may be used to provide a method for treating wastewater that provides an improved heavy metal recovering efficiency and floc formation capability.

### MODE FOR CARRYING OUT THE INVENTION

Specific embodiments of the present invention will be described hereunder. The heavy metal treatment agent of the present invention comprises at least one dithiocarbamate of one or more amine compounds represented by any of formulae (I) to (III). The expression "at least one dithiocarbamate of one or more amine compounds" as used herein refers to a dithiocarbamate that is made of at least one species of amine compounds as the ingredients. The dithiocarbamate is a compound in which a hydrogen atom bonded to a nitrogen atom of an amine compound of the ingredient is substituted by a dithioate.

The amine compound expressed by the formula (I) is linear. In the formula, m represents an integer of 3 to 6. It is preferred that m be 3 to 5, more preferably 3 to 4, and even more preferably 4 in terms of exhibiting excellency in treating elements of groups 6 to 16 of the periodic table or compounds thereof, and in some cases also for exhibiting excellency in either one or both of the stability of the dithiocarbamate in the heavy metal treatment agent and floc formation capability in wastewater treatment. One kind of the amine compounds represented by the formula (I) may be used alone, or two or more kinds thereof may be used in combination.

Examples of the amine compound represented by the formula (I) include, but are not particularly limited to, triethylenetetramine, tetraethylenepentamine, pentaethylenehexamine and hexaethyleneheptamine. Among them, in terms of exhibiting excellency in treating elements of groups 6 to 16 of the periodic table or compounds thereof, and in some cases also for exhibiting excellency in either one or both of the stability of the dithiocarbamate in the heavy metal treatment agent and floc formation capability in wastewater treatment, preferred are triethylenetetramine, tetraethylenepentamine and pentaethylenehexamine, and more preferred are triethylenetetramine and tetraethylenepentamine , and even more preferred is tetraethylenepentamine.

The amine compound represented by the formula (II) is branched. In the formula, each of the n Xs independently represents a hydrogen atom or a 2-aminoethyl group, at least one of them is a 2-aminoethyl group, n is an integer of 1 to 3 and the total number of nitrogen atoms is 4 to 8. It is preferred that n be 1 to 2, and it is more preferred that n be 2 in terms of exhibiting excellency in treating elements of groups 6 to 16 of the periodic table or compounds thereof, and in some cases also for exhibiting excellency in either one or both of the stability of the dithiocarbamate in the heavy metal treatment agent and floc formation capability in wastewater treatment. It is preferred that the total number of nitrogen atoms be 4 to 6, and it is more preferred that the total number of nitrogen atoms be 5. One kind of the amine compound represented by the formula (II) may be used alone, or two or more kinds thereof may be used in combination.

Examples of the amine compound represented by the formula (II) include, but are not particularly limited to, tris(2-aminoethyl)amine, N,N,N'-tris(2-aminoethyl)ethane-1,2-diamine, N,N,N',N'-tetra(2-aminoethyl)ethane-1,2-diamine, N,N-bis-(2-aminoethyl)-N'-[2-[(2-aminoethyl]ethyl]ethane (2-amino)ethyl] ethane-1,2-diamine, N¹-(2-[(2-aminoethyl)-[2-[(2-aminoethyl)amino]ethyl]amino]ethyl]ethane-1,2-diamine, N,N'-bis-(2-aminoethyl)-N-[2-[bis-(2(2-(2-aminoethyl)amino]ethyl]ethane-1,2-diamine and N,N-bis-(2-aminoethyl)-N'-[2-[bis-(2-aminoethyl)amino]ethyl]ethane-1,2-diamine. Among them, in terms of exhibiting excellency in treating elements of groups 6 to 16 of the periodic table or compounds thereof, and in some cases also for exhibiting excellency in either one or both of the stability of the dithiocarbamate in the heavy metal treatment agent and floc formation capability in wastewater treatment, preferred are tris(2-aminoethyl)amine, N,N,N'-tris(2-aminoethyl)ethane-1,2-diamine and N,N,N',N'-tetra(2-aminoethyl)ethane-1,2-diamine, among which N,N,N'-tris(2-aminoethyl)ethane-1,2-diamine is more preferred.

The amine compound represented by the formula (III) is formed of a combination of cyclic and liner structures. In the formula, o represents an integer of 0 to 2, p is 0 or 1, q is 0 or 1, r represents an integer of 0 to 3, the sum of o, p and r is greater than or equal to 1 and the total number of nitrogen atoms is 3 to 7.

It is preferred that o be 0 or 1, p be 0 or 1, q be 0 or 1, andr be an integer of 0 to 3 in terms of exhibiting excellency in treating elements of groups 6 to 16 of the periodic table or compounds thereof, and in some cases also for exhibiting excellency in either one or both of the stability of the dithiocarbamate in the heavy metal treatment agent and floc formation capability in wastewater treatment. It is more preferred that o be 0 or 1, p be 0, q be 0 or 1 and r be an integer of 0 to 3. It is even more preferred that o be 0 or 1, p be 0, q be 0 and r be an integer of 2 to 3. Meanwhile, it is preferred that the total number of nitrogen atoms be 3 to 6, more preferably be 4 to 5 and even more preferably be 5. One kind of the amine compound represented by the formula (III) may be used alone, or two or more kinds thereof may be used in combination.

Examples of the amine compound represented by the formula (III) include, but are not particularly limited to, aminoethylpiperazine, piperazine-1,4-diethylamine, N-(2-(1-piperazinyl)ethyl)ethylenediamine, N-[2-[4-(2-aminoethyl)piperazin-1-yl]ethyl]ethane-1,2 -diamine, N-(2-aminoethyl)-N'-[2-(piperazin-1-yl)ethyl]ethane -1,2-diamine, 4- [2-(1-piperazinyl)ethyl]-1-piperazine-ethaneamine, bis(2-(piperazin-1-yl)ethyl)amine, 1- [2-[[2[[2- [(2-aminoethyl)amino] ethyl] amino ethyl] amino ethyl] - piperazine, N-[2-[(2-aminoethyl)amino]ethyl]-1,4-piperazine-diethanamine, N,N'-bis(2-aminoethyl)-1,4-piperazine-diethanamine, N-[2-(1-piperazinyl)ethyl]-1,4-piperazine-diethanamine, N-[2-[(2-aminoethyl)amino]ethyl]-1,4-piperazine-diethanamine, N-[2-[(2-aminoethyl)amino]ethyl]-N'-[2-[4 -(2-aminoethyl)-piperazin-1-yl]ethyl]ethane-1,2-diamine and 2-[4-[2-[2-[4-(2-aminoethyl)-piperazin-1-yl]ethylamino]ethyl]-piperazin-1-yl]ethylamine. Among them, in terms of exhibiting excellency in treating elements of groups 6 to 16 of the periodic table or compounds thereof, and in some cases also for exhibiting excellency in either one or both of the stability of the dithiocarbamate in the heavy metal treatment agent and floc formation capability in wastewater treatment, preferred are aminoethylpiperazine, piperazine-1,4-diethylamine, N-(2-aminoethyl)-N'-[2-(piperazin-1-yl)ethyl]ethane -1,2-diamine, N-[2-[4-(2-aminoethyl)piperazin-1-yl]ethyl]ethane-1,2-diamine, 4-[2-(1-piperazinyl)ethyl]-1-piperazine-ethaneamine, Bis(2-(piperazin-1-yl)ethyl)amine, 1-[2-[[2[[2-[(2-aminoethyl)amino] ethyl] amino ethyl] amino ethyl] -piperazine, N-[2-[(2-aminoethyl)amino] ethyl] -1,4-piperazine-diethanamine and N-[2-(1-piperazinyl)ethyl]-1,4-piperazine-diethanamine; and more preferred are N-(2-aminoethyl)-N'-[2-(piperazin-1-yl)ethyl]ethane -1,2-diamine, N-[2-[4-(2-aminoethyl)piperazin-1-yl]ethyl]ethane-1,2-diamine and 4-[2-(1-piperazinyl)ethyl]-1-piperazine-ethanamine, among which N-(2-aminoethyl)-N'-[2-(piperazin-1-yl)ethyl]ethane -1,2-diamine or N-[2-[4-(2-aminoethyl)piperazin-1-yl]ethyl]ethane-1,2-diamine is even more preferred.

In a preferable embodiment, the heavy metal treatment agent of the present invention contains an amine compound represented by the formula (III). In terms of exhibiting excellency in treating elements of groups 6 to 16 of the periodic table or compounds thereof, and in some cases also for exhibiting excellency in either one or both of the stability of the dithiocarbamate in the heavy metal treatment agent and floc formation capability in wastewater treatment, it is preferred that the agent contains an amine compound represented by the formula (III) that has a combination of linear and cyclic structures in one molecule rather than an amine compound consisting only of linear or cyclic structure, or than a mixture of: an amine compound consisting only of a linear structure; and an amine compound consisting only of a cyclic structure, respectively among which it is more preferred that the agent contains an amine compound represented by the formula (III) having two or more cyclic structures in one molecule. It is preferred that the heavy metal treatment agent contain at least one species selected from the amine compounds represented by the formulae (IIIa), (IIIb) and (IIIc) as the amine compounds of (III). In this case, it is preferred that the heavy metal treatment agent contain both of the amine compounds represented by the formulae (IIIa) and (IIIb). In this case, it is preferred that the heavy metal treatment agent further contain, as an amine compound represented by the formula (III), an amine compound represented by the formula (IIIc).

In a preferable embodiment, the heavy metal treatment agent of the present invention contains all of the amine compounds represented by the formulae (I) to (III). The heavy metal treatment agent containing all of the amine compounds represented by the formulae (I) to (III) is particularly suitable for treating the elements of groups 6 to 16 of the periodic table or compounds thereof, and in some cases also for enhancing the stability of dithiocarbamate in the heavy metal treatment agent and/or forming flocs in wastewater treatment. It is preferred that the heavy metal treatment agent contain, as amine compounds represented by any of formulae (I) to (III), all of the amine compounds represented by the formulae (Ia), (IIa), (IIIa) and (IIIb). In this case, it is preferred that the heavy metal treatment agent further contain, as an amine compound represented by the formula (III), a compound represented by the formula (IIIc).

The amount of an amine compound (%) as used herein refers to an area percentage of a peak area of the amine compound over the total sum of the peak areas from which the peak of the solvent used for the analysis of the compounds by gas chromatography is subtracted.

An amine compound in an amount of the following range is suitable for treating the elements of groups 6 to 16 of the periodic table or compounds thereof, and in some cases also for enhancing the stability of dithiocarbamate in the heavy metal treatment agent and/or forming flocs in wastewater treatment.

It is preferred that the amount of amine compound represented by the formula (I) be 0.0% or more and 80.0% and less, more preferably 20.0% or more and 80.0% or less, even more preferably 20.0% or more and 55.0% or less, particularly preferably 25.0% or more and 55.0% or less and more particularly preferably 40.0% or more and 55.0% or less.

It is preferred that the amount of amine compound represented by the formula (II) be 0.0% or more and 50.0% or less, more preferably 5.0% or more and 30.0% or less, even more preferably 5.0% or more and 25.0% or less, particularly preferably 15.0% or more and 25.0% or less and more particularly preferably 15.0% or more and 20.0% or less.

It is preferred that the amount of amine compound represented by the formula (III) be 10.0% or more and 100.0% or less, more preferably 10.0% or more and 80.0% or less, even more preferably 10.0% or more and 65.0% or less, particularly preferably 20.0% or more and 65.0% or less, more particularly preferably 25.0% or more and 65.0% or less, further preferably 27.0% or more and 65.0% or less and most preferably 27.0% or more and 45.0% or less.

It is preferred that the amount of amine compound represented by the formula (IIIa) be 0.0% or more and 40.0% or less, more preferably 10.0% or more and 40.0% or less, even more preferably 10.0% or more and 35.0% or less, and particularly preferably 22.0% or more and 30.0% or less.

It is preferred that the amount of amine compound represented by the formula (IIIb) be 0.0% or more and 20.0% or less, more preferably 1.0% or more and 15.0% or less, even more preferably 1.0% or more and 10.0% or less, particularly preferably 6.0% or more and 10.0% or less, and more particularly preferably greater than 6.0% and equal to or less than 10.0%.

It is preferred that the total amount of the amine compounds of the formulae (IIIa) and (IIIb) be 0.0% or more and 50.0% or less, more preferably 10.0% or more and 50.0% or less, even more preferably 13.0% or more and 40.0% or less, particularly preferably 17.0% or more and 40.0% or less, and more particularly preferably 27.0% or more and 40% or less.

It is preferred that the amount of the amine compounds of the formula (IIIc) be 0.0% or more and 1.0% or less, and more preferably greater than or equal to 0.1% and less than 1.0%.

It is preferred that the total amount of the amine compounds of the formulae (IIIa), (IIIb) and (IIIc) be 0.0% or more and 50.0% or less, more preferably 10.0% or more and 50.0% or less, even more preferably 13.0% or more and 40.0% or less, particularly preferably 17.0% or more and 40.0% or less, and more particularly preferably 28.0% or more and 40.0% or less.

The amine compounds represented by the formulae (I) to (III) may be manufactured by a method which is not particularly limited and the method may be any known method, and a cost-effective and simple method is preferred.

In the heavy metal treatment agent of the present invention, examples of the dithiocarbamate include, but are not particularly limited to, a dithiocarbamate obtained by reacting an amine compound(s) represented by any of the formulae (I) to (III), carbon disulfide and a base of, for example, a metallic hydroxide.

Examples of the dithiocarbamate include, but are not particularly limited to, salts of a dithiocarbamic acid with an alkali metal, an alkaline-earth metal and an ammonium. Examples of the alkali metal salt include a lithium salt, a sodium salt and a potassium salt. Examples of the alkaline-earth metal include a magnesium salt and a calcium salt. Among them, an alkali metal salt is preferred, and more preferred are a sodium salt and a potassium salt between which a sodium salt is even more preferred.

In the heavy metal treatment agent of the present invention, no particular limitation will be imposed on a reaction molar ratio of the amine compound, carbon disulfide and a base of, for example, a metallic hydroxide. The dithiocarbamate is a compound (salt type functional group) in which a salt of dithioic acid group is bonded to a nitrogen atom of the amine compound. It is also preferred that two or more salts of dithioic acid group are introduced per one molecule of the amine compound. One kind of the dithiocarbamate may be used alone, or two or more kinds thereof may be used in combination. It is preferred in respect of enhancing heavy metal treatment capability of, for example, incinerated ash or wastewater treatments that carbon disulfide react with 0.5 to 1 times moles, more preferably 0.7 to 1 times moles, even more preferably 0.8 to 1 times moles, and particularly preferably 0.9 to 1 times moles of nitrogen atom of primary or secondary amino group calculated from the amount of amine compounds obtained from the above-mentioned method.

The method of manufacturing the dithiocarbamate by reacting an amine compound, carbon disulfide, and a base is not particularly limited. For example, an amine compound and a base of a metallic hydroxide as exemplified as a salt may be dissolved or suspended in a solvent such as water to which carbon disulfide may then be added to make them react for the introduction thereof. The unreacted carbon disulfide may ultimately be removed if necessary. When a product other than dithiocarbamate is produced as a byproduct during a dithiocarbamate production process, carbon disulfide gas or other gases may be generated from, for example, the byproduct during the storage or use of the heavy metal treatment agent. In order to contain the generation of these gases, a preferable embodiment includes the one that involves the use of an excessive amount of amine compound during the process of producing the heavy metal treatment agent to introduce unreacted amine compounds therein or the one that involves the addition of at least one species selected from an amine compound and an amine derivative after manufacturing of the dithiocarbamate.

The heavy metal treatment agent of the present invention may take any dosage form including, for example, a form of solid, liquid and viscous body which is not particularly limited as long as it contains a dithiocarbamate. In terms of handleability, it is preferred that the agent be used in the form of a liquid solution. When the heavy metal treatment agent is used in the form of an aqueous solution, it is preferred in terms of stability of the dithiocarbamate that the content of dithiocarbamate be, although not particularly limited to the following, 20wt% to 60wt%, more preferably 30wt% to 50wt% based on the total amount of the heavy metal treatment agent Regarding stability of the solution during the storage of heavy metal treatment agent, the agent containing an amine compound is preferable in terms of preventing crystal formation.

The heavy metal treatment agent may contain a further component as long as it does not impair the technical advantage of the present invention. Examples of the further component include, but are not particularly limited to, an amine compound, an amine derivative, an ammonium salt, an organic agent, a reducing agent, an oxidant, an alkali metal hydroxide, a pH adjuster, an inorganic heavy metal treatment agent, a flocculation agent, a rust inhibitor, a scale preventive, an antifoaming agent, a stabilizing agent, a gas containment agent and a surfactant.

The following is a description of heavy metal treatment using the heavy metal treatment agent of the present invention. The heavy metal treatment agent of the present invention may be mixed with a solid (including a slurry) object, liquid object and/or waste gas object containing the elements of groups 6 to 16 of the periodic table as set forth below or compounds thereof to make it react with these elements or compounds thereof to form a matter insoluble to water to thereby prevent or reduce leaching thereof from the solid object or to separate the insolubilized matter from the liquid object for removing the elements of groups 6 to 16 of the periodic table or compounds thereof. Examples of the solid object include, but are not particularly limited to, incinerated ash (such as Fly Ash (FA) and Bottom Ash (BA)) generated from a waste incineration plant, sludge, slag, earth and shredder residue; and examples of the liquid object include, but are not particularly limited to, wastewater, waste oil, liquid sludge and waste gas washing wastewater.

The heavy metal treatment agent of the present invention intends to treat the elements of groups 6 to 16 of the periodic table or compounds thereof.

Examples of the elements belonging to "group 6" include chromium, molybdenum, tungsten and seaborgium.

Examples of the elements belonging to "group 7" include manganese, technetium, rhenium and bohrium.

Examples of the elements belonging to "group 8" include iron, ruthenium, osmium, hassium.

Examples of the elements belonging to "group 9" include cobalt, rhodium, iridium and meitnerium.

Examples of the elements belonging to "group 10" include nickel, palladium, platinum and darmstadtium.

Examples of the elements belonging to "group 11" include copper, silver, gold and roentgenium.

Examples of the elements belonging to "group 12" include zinc, cadmium, mercury and copernicium.

Examples of the elements belonging to "group 13" include boron, aluminium, gallium, indium, thallium and nihonium.

Examples of the elements belonging to "group 14" include carbon, silicon, germanium, tin, lead and flerovium.

Examples of the elements belonging to "group 15" include nitrogen, phosphorus, arsenic, antimony, bismuth and moscovium.

Examples of the elements belonging to "group 16" include oxygen, sulfur, selenium, tellurium, polonium and livermorium.

The elements belonging to the same group may likewise be treated by the heavy metal treatment agent of the present invention in the same manner because they have similar characteristics of the outermost electron shells.

Particularly exemplified elements include chromium, molybdenum and tungsten as elements in group 6; manganese as an element in group 7; iron, ruthenium and osmium as elements in group 8; cobalt, rhodium and iridium as elements in group 9; nickel, palladium and platinum as elements in group 10; copper, silver and gold as elements in group 11; zinc, cadmium and mercury as elements in group 12; boron, gallium and indium and thallium as elements in group 13; germanium, tin and lead as elements in group 14; arsenic, antimony and bismuth as elements in group 15; and selenium and tellurium as elements in group 16. Among them, the agent may suitably treat chromium, manganese, iron, cobalt, nickel, copper, zinc, cadmium, mercury, aluminium, tin, lead, arsenic and selenium and compounds thereof. The agent may more suitably treat chromium, manganese, iron, cobalt, nickel, copper, zinc, cadmium, mercury, aluminium, lead, arsenic and selenium and the compounds thereof. Among them, the agent may more suitably treat chromium, manganese, iron, nickel, copper, zinc, cadmium, mercury, lead, arsenic and selenium and compounds thereof for which a landfilling standard, an effluent standard or other standards are set.

Examples of the compounds of the above-listed elements include a matter where the above-listed element is bonded to another element via, for example, covalent binding, ion binding or coordination bond, and examples of such include, but are not limited to, for example, an oxidative product, a hydroxide, an oxo acid and the salt thereof, a halide, a complex and a complex salt.

### (Incinerated ash treatment)

The incinerated ash treatment using the heavy metal treatment agent of the present invention is intended for the treatment of incinerated ash (fly ash and bottom ash) generated from combustion plants such as incinerators or melting furnaces of, for example, municipal wastes, industrial wastes, sludge, biomass boiler, paper sludge, coal and solidified waste fuel (RDF: Refuse Derived Fuel; or RPF: Refuse derived paper and plastics densified Fuel) and/or incinerated ash (fly ash and bottom ash) generated from combustion plants such as an electric furnace for iron and steel manufacturing, a roasting furnace for metal smelting, a sintering furnace, a calcination furnace, a blast furnace, a converter furnace, a melting furnace and a drying furnace, and the incinerated ash treatment is intended not only for the treatment of incinerated ash but also for the treatment of earth, sludge and slag which contain an element of groups 6 to 16 of the periodic table or a compound thereof.

The term "incinerated ash" as used herein refers to a bottom ash (BA) which is a residue of combustion from an incinerator and to a fly ash (FA) which flies together with the flue gases generated by incineration. The fly ash includes a fly ash (from ash melting furnace) that is produced by a melting process. Further, the fly ash may contain an exhaust gas treatment agent of other types such as lime hydrate or activated charcoal. This term is not particularly used to distinguish one from the other, and the term "incinerated ash" as expressed hereunder is not intended to distinguish the bottom ash from the fly ash.

It is preferred that the dosage of the heavy metal treatment agent of the present invention in terms of additive rate to the incinerated ash be 0.01wt% or more, more preferably 0.1wt% or more, even more preferably 0.5wt% or more, and particularly preferably 1wt% or more. It is also preferred that the dosage be 30wt% or less, more preferably 20wt% or less, even more preferably 15wt% or less, and particularly preferably 10wt% or less. The dosage within these ranges is suitable for obtaining the technical advantage of the invention. Excessive use of the heavy metal treatment agent may risk the re-elution of heavy metals that have been insolubilized by dithiocarbamate.

The heavy metal treatment agent may preferably treat incinerated ash that contains at least any one or more of the elements of groups 6, 12 and 14 or compounds thereof among the elements of groups 6 to 16 or compounds thereof.

In respect of reaction efficiency between heavy metals and dithiocarbamate contained in the heavy metal treatment agent of the present invention, when the treatment ash is in a dry powder state, heavy metal ions and dithiocarbamate cannot be smoothly moved, and the frequency of contact therebetween is decreased to thereby thwart the sufficient progress of the reaction. Treatment ash in a liquid state may be uneconomical because it necessitates a dewatering process or results in an excessive amount of water content for transporting the treatment ash. For this reason, in order to treat the heavy metals in a proper manner, it is preferred that an optimum amount of water be added thereto to turn it into an aggregated, slurry or powder state having an optimum content of water, and the one having an aggregated state is more preferred. The additive rate of water is not particularly limited, and the additive rate thereof over the incinerated ash is preferably 5wt% or more, more preferably 10wt% or more, even more preferably 15wt% or more, and particularly preferably 20wt% or more. The additive rate thereof over the incinerated ash is 150wt% or less, preferably 100wt% or less, more preferably 80wt% or less, even more preferably 60wt% or less, and particularly preferably 40wt% or less. The additive rate as large as or larger than a predetermined amount allows the dithiocarbamate to efficiently contact the heavy metals in the incinerated ash, which thereby facilitates formation of the insolubilized matter. An excessive additive rate of water results in a slurry or liquid state rather than the aggregated state, which makes the handling (such as transportation) of the treatment ash to be cumbersome.

When the heavy metal treatment agent of the present invention and water are mixed with incinerated ash, the heavy metal treatment agent and water may be simultaneously added into the incinerated ash or they may be separately added thereinto. Alternatively, the heavy metal treatment agent and water may be mixed beforehand, after which the mixture may be added to the incinerated ash; that is, the heavy metal treatment agent, water and the incinerated ash may be added or mixed in any order.

The heavy metal treatment agent of the present invention can treat any basic, acidic, and neutral incinerated ashes, among which the agent can preferably treat basic and neutral ashes between which a basic ash can more preferably be treated. The acidity or basicity of incinerated ash can be based on the pH of an eluate of the incinerated ash. In this respect, the heavy metal treatment agent of the present invention can treat an incinerated ash whose pH for the eluate (sample solution) in accordance with the method as set forth in the Japanese environment agency notification No. 13 is preferably 6 or more, more preferably 9 or more, even more preferably 11.5 or more and particularly preferably 12 or more. A basic or acidic compound, a pH adjuster or other agents may be added to the incinerated ash during the incinerated ash treating to control pH of the eluate.

As to the incinerated ash treatment using the heavy metal treatment agent of the present invention, there may be used a further component together with the heavy metal treatment agent and water as long as it does not impair the technical advantage of the present invention. Examples of such further component include, but are not particularly limited to, a flocculation agent, a pH adjuster, a rust inhibitor, a reducing agent, an oxidant, a surfactant, an adsorbent, an alkali metal hydroxide, a cement and a liquid glass.

When the incinerated ash is treated with the heavy metal treatment agent, there may be performed, for example, a post processing after the mixture with water or other agents. The post processing is performed while stirring or allowing it to standstill to thereby prevent the leaching of the heavy metals in a stable manner. The fly ash generated during incineration in an incinerator is transported, together with the exhaustive gas, to a bag filter with separate walls, a circulating electrostatic precipitator or a cyclone to be collected there. The collected fly ash is stored in, for example, a silo and then transported to a batch-type or continuous mixer to which the heavy metal treatment agent and water are added and uniformly mixed. The mixture discharged from the mixer is conveyed by a conveyer and transported to a pit. Post processing of the mixture may be carried out in an indoor installation such as on a conveyer or in a pit where the mixture discharged from the mixer is conveyed or stored within doors, or in a storage enclosure such as a container.

The bottom ash generated during incineration in an incinerator has a high temperature when the ash is discharged from the incinerator, and therefore the ash is normally put into a water tank to be cooled. Examples of the method of insolubilizing the bottom ash include a method of adding the heavy metal treatment agent of the present invention into the water tank to make them react in the water tank for insolubilization and a method of adding the heavy metal treatment agent and water into the dewatered bottom ash directly or after subjecting the ash in a pulverization processing, and then stirring and mixing them for insolubilization. The post processing of the insolubilized bottom ash may be carried out in an indoor installation such as on a conveyer or in a pit where the mixture discharged from the mixer is conveyed or stored within doors, or in a storage enclosure such as container as is the case for the fly ash.

### (Wastewater treatment)

The wastewater treatment using the heavy metal treatment agent of the present invention refers to a separation process of target elements of groups 6 to 16 of the periodic table or compounds thereof from the subject water solution, and examples of which include, but are not particularly limited to, a process of making the heavy metal treatment agent react with the target elements or compounds thereof and separating the resultant insolubilized flocs (aggregates and/or sediments).

The heavy metal treatment agent of the present invention is excellent in floc formation capability, allows easy removal of the flocs, and allows the target elements or compounds thereof to be treated in a convenient manner.

The wastewater treatment using the heavy metal treatment agent of the present invention may be performed by adding the heavy metal treatment agent into the subject water solution. The subject water solution as used herein refers to a water solution that contains the subject elements or compounds thereof, and the term also encompasses such solution before or after adding the heavy metal treatment agent. The subject water solution containing untargeted elements or compounds can also be treated in a favourable manner.

The subject water solution can be treated in a favourable manner even if it contains, for example, EDTA, organic acids such as citric acid, phosphoric acid compounds, amine compounds, complexing agents including cyanide compounds, oxidants, reducing agents, surfactants, salts and organic and inorganic compounds although they are not particularly limited.

The treatment after the addition may be carried out under the condition of, for example, stirring or allowing it to standstill which is also not particularly limited. The insoluble matters or solids after the treatment may be separated for removal. The manner of removing the insoluble matters or solids is not particularly limited but includes a method of, for example, filtering, centrifugating and settling down the solids, and then separating them from the supernatant solution.

There may be used any equipment or operations for agitation which are not particularly limited, and conventionally known equipment and operations can be used. No special equipment needs to be used for allowing it to standstill, and a sedimentation separation tank, for example, may be installed to perform the solid-liquid separation.

In the treatment using the heavy metal treatment agent of the present invention, the subject water solution may be added with not only the heavy metal treatment agent but also a further component such as a pH adjuster, a flocculation agent, an alkali metal hydroxide, an inorganic heavy metal treatment agent, a rust inhibitor, a scale preventive, an antifoaming agent, an adsorbent, a surfactant, a complexing agent, an oxidant and a reducing agent. The pH adjuster may be added therein to perform the treatment in a suitable pH region to thereby prevent the decomposition of the heavy metal treatment agent and promote the formation of flocs, which allows the elements of groups 6 to 16 of the periodic table or compounds thereof to be suitably treated.

Examples of the pH adjuster include, but are not particularly limited to, inorganic acids such as sulfuric acid, hydrochloric acid, nitric acid and inorganic alkalis such as sodium hydroxide, potassium hydroxide and calcium hydroxide. The following flocculants may also be used as pH adjusters.

The addition of a flocculant on top of adding the heavy metal treatment agent improves sedimentation properties of the flocs.

The flocculant may be added as necessary and stirred to separate the resultant flocs. This process removes the intended elements or compounds thereof contained in the wastewater.

Examples of the flocculant include, but are not particularly limited to, a polymer flocculant, an inorganic flocculant and minerals among which a polymer flocculant and an inorganic flocculant are preferred, and a polymer flocculant is more preferred.

Anionic, cationic, non-ionic polymer and ampholytic polymer flocculants may be used as polymer flocculants, and examples of which include, but are not particularly limited to, anionic flocculants such as flocculants of polyacrylamide, sodium polyacrylate, polyacrylic acid, and naturally derived flocculants; cationic flocculants such as flocculants of polymethacrylic ester, polyacrylic ester, polyamine, poly dadmac and dicyandiamide; non-ionic flocculants such as flocculants of polyacrylamide, polyethylene glycol and polyvinyl alcohol;and ampholytic flocculants such as flocculants of polyacrylic ester/ acrylic acid copolymer. Specific examples of them include sodium polyacrylate, sodium alginate, a copolymer of acrylamide and sodium acrylate, a copolymer of acrylamide and sodium acrylamide-2-methylpropanesulfonate (AMPS), a copolymer of acrylamide/acrylic acid/AMPS, polydimethylaminoethyl (meth)acrylate quaternary salt, a copolymer of dimethylaminoethyl (meth)acrylate quaternary salt and acrylamide, polydimethyldiallylammonium chloride, a copolymer of dimethyldiallylammonium chloride and acrylamide, polyamidine, epichlorohydrin-dimethylamine condensation products, polycondensation products of dicyandiamide, ammonium chloride and formaldehyde, polyacrylamide, polyethylene oxide, a copolymer of dimethylaminoethyl (meth)acrylate quaternary salt and acrylic acid, and Hofman degradation products of polyacrylamide. Among them, preferred are anionic and cationic flocculants, and an anionic flocculant is more preferred. Among the anionic flocculant, sodium polyacrylate, and a copolymer of acrylamide and sodium acrylate are more preferred. Among the cationic flocculant, a copolymer of dimethyldiallylammonium chloride and acrylamide is more preferred.

Examples of the inorganic flocculant include, but are not particularly limited to, an iron-based inorganic flocculant (such as ferric chloride, ferrous chloride, ferric sulfate, ferrous sulfate and poly ferric sulfate), an aluminium-based inorganic flocculant (such as aluminium sulfate, polyaluminum chloride, aluminum chloride) and an alkaline inorganic flocculant (such as calcium chloride, magnesium hydroxide, potassium aluminate). Among them, preferred are an iron-based inorganic flocculant and an aluminium-based inorganic flocculant, among which more preferred are ferric chloride, ferrous sulfate, poly ferric sulfate, aluminium sulfate, polyaluminum chloride and calcium chloride, and even more preferred are ferric chloride, ferrous sulfate, poly ferric sulfate, aluminium sulfate and polyaluminum chloride.

One kind of the above-listed flocculants may be used alone, or two or more kinds of them may be used in combination.

Examples of the mineral include, but are not particularly limited to, carbonate minerals such as hydrotalcite, magnesite, and limestone; silicate minerals such as zeolite, montmorillonite, kaolin, bentonite and silica; oxide minerals such as alumina; sulfate minerals such as gypsum; and phosphate minerals such as hydroxyapatite.

One kind of flocculant may be used alone, or two or more kinds thereof may be used in combination, and the number of uses may be once or two or more times. It is a preferable embodiment to use inorganic and polymer flocculants in combination. The combined usage of the inorganic and polymer flocculants can preferably treat the elements of groups 6, 10, 11, 12, 14, 15 and 16 or compound thereof among the elements of groups 6 to 16 or compound thereof as listed above.

The present invention has thus far been described based on the embodiments thereof; however, the invention shall not be limited to these embodiments, and may be variously modified without departing from the scope of the gist of the present invention.

### WORKING EXAMPLES

The present invention will be described in greater detail hereunder with reference to working examples; the invention shall not be limited to the following working examples.

### [Amine compound]

As for the amine components, reagents that are commonly distributed and commercially available were used. Carbon disulfide, sodium hydroxide and potassium hydroxide all manufactured by KANTO CHEMICAL CO., INC. were used.

The quantities of amine compounds were analysed by gas chromatography (GC) using samples in which an amine compound(s) was/were dissolved in a solvent (methanol). The analysis was performed using the GC of a model GC-2010 Plus by SHIMADZU CORPORATION and a capillary column TC-1 (length 13m, inner diameter 0.25mm, film thickness of liquid phase 0.25µm)(GL Sciences Inc.) with the following conditions:

• SPL (Vaporization Chamber)

| | | | |
|---|---|---|---|
| Temperature: | 300°C | Total Flow Rate: | 45.1 ml/min. |
| Pressure: | 48.9 Kpa | Column Flow Rate: | 1.03 ml/min. |
| Carrier Gas: | Helium | Linear Velocity : | 30.2 cm/sec. |
| Split Ratio : | 40.0 | Purge Flow Rate: | 3.0 mL/min. |

• Heat-up condition

| | | | | | |
|---|---|---|---|---|---|
| Set temperature: | 50°C; | hold time: | 3min. | | |
| Ramp rate: | 10.0°C/min.; | Set temperature: | 160°C | | |
| Ramp rate: | 20.0°C/min.; | Set temperature: | 300°C; | Hold time: | 10 min. |

• FID (Detector)

| | |
|---|---|
| Temperature: | 300°C |
| Makeup gas: | Helium |
| Makeup flow rate: | 30.0 mL/min. |
| H₂ flow rate: | 40.0 mL/min. |
| Air flow rate: | 400.0 mL/min. |

Note that the amount of each amine compound (%) indicates an area rate (area percentage) of a peak area in the GC chart of the amine compound over the total sum of the peak areas of the amine compounds from which the peak of the solvent used for the analysis is subtracted.

As for the tetraethylenepentamine to be described below, a commercially available product (a mixture of a linear compound, a branched compound and a combined compound of cyclic and linear structures) that is commonly distributed and is an industry product was used. The above-mentioned analysis showed that this tetraethylenepentamine had 48.2% of amine compound of formula (Ia) that is linear, 18.3% of amine compound of formula (IIa) that is branched and 32.7% of amine compound of formula (III) that is a combination of cyclic and linear structures (in which the amine compound is made up of: formula (IIIa) 25.5%; formula (IIIb) 6.4%; and formula (IIIc) 0.8%).

### [Heavy metal treatment agent]

### • Heavy metal treatment agent (A)

A sample (40wt% aqueous solution) prepared by reacting 15.9g of N-(2-aminoethyl)piperazine (manufactured by Tokyo Chemical Industry Co., Ltd), 18.7g of carbon disulfide and 20.5g of 48.0% sodium hydroxide aqueous solution in 44.9g of ion-exchange water was used (1 times moles of carbon disulfide per nitrogen atom of primary or secondary amino group of the amine compound). The N-(2-aminoethyl)piperazine was of 100.0 % amine compound of formula (III) that is a combination of cyclic and linear structures.

### • Heavy metal treatment agent B

A sample (40wt% aqueous solution) prepared by reacting 13.0g of tetraethylenepentamine (a marketed product which is a mixture of a linear compound, a branched compound, and a combined compound of cyclic and linear structures), 20.9g of carbon disulfide and 22.9g of 48.0% sodium hydroxide aqueous solution in 43.2g of ion-exchange water was used (1 times moles of carbon disulfide per nitrogen atom of primary or secondary amino group calculated from the amount of the amine compound obtained from the above-described method).

### • Heavy metal treatment agent C

A sample (40wt% aqueous solution) prepared by reacting 5.3g of N-(2-aminoethyl)piperazine (manufactured by Tokyo Chemical Industry Co., Ltd), 8.7g of tetraethylenepentamine (a marketed product which is a mixture of a linear compound, a branched compound, and a combined compound of cyclic and linear structures), 20.2g of carbon disulfide and 22.1g of 48.0% sodium hydroxide aqueous solution in 43.7g of ion-exchange water was used (1 times moles of carbon disulfide per nitrogen atom of primary or secondary amino group calculated from the amount of the amine compound obtained from the above-described method). The amount of amine compounds was of 32.1% of amine compound of formula (Ia) that is linear, 12.2% of amine compound of formula (IIa) that is branched, and 55.2% of amine compound of formula (III) that is a combination of cyclic and linear structures (in which the amine compound is made up of: formula (IIIa) 17.0%, formula (IIIb) 4.3%, formula (IIIc) 0.6% and N-(2-aminoethyl)piperazine 33.3%).

### • Heavy metal treatment agent D

A sample (40wt% aqueous solution) prepared by reacting 2.2g of triethylenetetramine (Sigma-Aldrich Japan K.K.), 10.4g of tetraethylenepentamine (a marketed product which is a mixture of a linear compound, a branched compound and a combined compound of cyclic and linear structures), 21.2g of carbon disulfide and 23.4g of 48.0% sodium hydroxide aqueous solution in 42.8g of ion-exchange water was used (1 times moles of carbon disulfide per nitrogen atom of primary or secondary amino group calculated from the amount of the amine compound obtained from the above-described method). The amount of amine compounds was of 58.6% of the amine compound of formula (I) that is linear (in which the amine compound is made up of: formula (Ia) 38.6% and triethylenetetramine 20.0%), 14.6% of the amine compound of formula (IIa) that is branched, and 26.2% of the amine compound of formula (III) that is a combination of cyclic and linear structures (in which the amine compound is made up of: formula (IIIa) 20.4%, formula (IIIb) 5.1% and formula (IIIc) 0.7%).

### • Heavy metal treatment agent E

A sample (40wt% aqueous solution) prepared by reacting 9.4g of ethylenediamine (manufactured by KANTO CHEMICAL CO.), 23.7g of carbon disulfide and 26.0g of 48.0% sodium hydroxide aqueous solution in 40.8g of ion-exchange water was used (1 times moles of carbon disulfide per nitrogen atom of the primary or secondary amino group).

### • Heavy metal treatment agent F

A sample (40wt% aqueous solution) prepared by reacting 10.4g of diethylene triamine (manufactured by Tokyo Chemical Industry Co., Ltd), 23.0g of carbon disulfide and 25.2g of 48.0% sodium hydroxide aqueous solution in 41.4g of ion-exchange water was used (1 times moles of carbon disulfide per nitrogen atom of primary or secondary amino group).

### • Heavy metal treatment agent G

A sample (40wt% aqueous solution) prepared by reacting 11.0g of piperazine anhydrous (manufactured by Tokyo Chemical Industry Co., Ltd), 19.4g of carbon disulfide and 30.5g of 48.0% sodium hydroxide aqueous solution in 39.1g of ion-exchange water was used (1 times moles of carbon disulfide per nitrogen atom of a primary or secondary amino group).

### • Heavy metal treatment agent H

A sample (40wt% aqueous solution) prepared by mixing 35.0g of heavy metal treatment agent F and 15.0g of heavy metal treatment agent G was used (1 times moles of carbon disulfide per nitrogen atom of a primary or secondary amino group).

### (Incinerated ash treatment)

The heavy metal treatment agent and water were added to 100g of incinerated ash (fly ash collected in a bag filter) generated from a municipal waste incineration plant at the additive amounts as shown in Table 1 such that the content percentages of dithiocarbamate group of the added heavy metal treatment agent to the fly ash were of the same level, and kneaded for 10 minutes to uniformly mix them using a porcelain mortar as a receptacle. The blank test was performed in the same manner as that of the working examples except that only water was added. The incinerated ashes (treated ashes) of the working examples, comparative examples and the blank test after the treatment were all in aggregated states and properly treated. The resultant treated ashes underwent measurements of elution concentration of chromium, mercury and lead in accordance with the method as set forth in the Japanese environment agency notification No. 13. The results are as shown in Table 1. The concentrations of chromium (Group 6) and lead (Group 14) in the elute were measured using a ICP atomic emission spectrometer (ICPE-9820, Shimadzu Corporation) while the concentration of mercury (Group 12) was measured using a mercury analyser (MA-3000, Nippon Instruments Corporation). The pH in the elute was measured using a pH meter (F-72, HORIBA Advanced Techno, Co., Ltd) and a pH Electrode (9632-10D, HORIBA Advanced Techno, Co., Ltd).

**[Table 1]**

| | Working example | | | | Comparative example | | | | Blank test |
|---|---|---|---|---|---|---|---|---|---|
| | 1 | 2 | 3 | 4 | 1 | 2 | 3 | 4 | |
| Heavy metal treatment agent | A | B | C | D | E | F | G | H | - |
| Concentration (wt.%) of heavy metal treatment agent | 40.0 | 40.0 | 40.0 | 40.0 | 40.0 | 40.0 | 40.0 | 40.0 | - |
| Content percentage (wt.%) of dithiocarbamate group in heavy metal treatment agent | 18.7 | 20.9 | 20.2 | 21.2 | 23.7 | 23.0 | 19.4 | 21.9 | - |
| Additive amount (wt.%) of heavy metal treatment agent | 2.7 | 2.4 | 2.5 | 2.4 | 2.1 | 2.2 | 2.6 | 2.3 | - |
| Content percentage (wt.%) of dithiocarbamate group of added heavy metal treatment agent | 0.5 | 0.5 | 0.5 | 0.5 | 0.5 | 0.5 | 0.5 | 0.5 | - |
| Additive amount (wt.%) of water | 27.3 | 27.6 | 27.5 | 27.6 | 27.9 | 27.8 | 27.4 | 27.7 | 30.0 |
| Eluate concentration (mg/L) of chromium | 0.07 | <0.05 | <0.05 | <0.05 | 0.09 | 0.08 | 0.13 | 0.09 | 0.17 |
| Eluate concentration (mg/L) of mercury | 0.0011 | 0.0007 | 0.0010 | 0.0010 | 0.0013 | 0.0012 | 0.0022 | 0.0024 | 0.11 |
| Eluate concentration (mg/L)of lead | 0.08 | <0.05 | <0.05 | 0.07 | 4.1 | 1.3 | 0.09 | 0.12 | 22 |

As shown in Table 1, when the heavy metal treatment agent was added such that the content percentages of dithiocarbamate group of the added heavy metal treatment agent were of the same level, working examples 1 to 4 exhibited lower elution concentrations of chromium (group 6), mercury (group 12) and lead (group 14) compared to those of the comparative examples 1 to 4, and exhibited an excellent performance of the heavy metal treatment agent of the present invention for the elements of group 6, group 12 and group 14, which therefore indicates that a dithiocarbamate containing any amine compound of any one or more formulae (I) to (III), or a dithiocarbamate containing an amine compound of formula (III) showed a superior performance for the elements of group 6, group 12 and group 14 or compounds thereof.

Further, the dithiocarbamates of the formula (III) having combinations of linear and cyclic structures in one molecule of the working examples 1 to 4 suggested superior performances for the elements of group 6, group 12 and group 14 or compounds thereof comparing with the comparative examples 1 and 2 that are dithiocarbamates of amine compounds consisting only of liner structure per molecule, the comparative example 3 that is a dithiocarbamate of an amine compound consisting only of a cyclic structure per molecule and the comparative example 4 that is a mixture of an amine compound consisting only of liner structure per molecule and an amine compound consisting only of cyclic structure per molecule.

Comparing the working examples 2 to 4 with the working example 1, the working examples 2 to 4 exhibited more reduced elution concentrations of chromium, mercury and lead, and showed superior performance for the elements of group 6, group 12 and group 14 or compounds thereof when the dithiocarbamate contains any one or more amine compounds of the formulae (IIIa), (IIIb) and (IIIc), particularly when the compounds have not only those of the formulae (IIIa) and (IIIb) but also that of formula (IIIc); or when the dithiocarbamate contains any one or more amine compounds of the formulae (I), (II) and (III), particularly when the compounds have not only those of formulae (Ia), (IIa), (IIIa) and (IIIb) but also that of formula (IIIc).

Further, comparing the comparative example 3 with the comparative examples 1 and 2, the working example 3 exhibited more superior performance for treating lead, which therefore indicates superiority of treating the elements of group 14 or compounds thereof using a dithiocarbamate of an amine compound consisting only of cyclic structure to the one using a dithiocarbamate of an amine compound consisting only of linear structure. In view of the above, among the amine compounds of the formula (III) with the combination of linear and cyclic structures, it was indicated that the amine compound of the formula (IIIc) having two cyclic structures has a superior performance for treating the elements of groups 6, 12 and 14 or compounds thereof.

Comparing the working examples 2 and 3 with the working example 4, the working examples 2 and 3 had reduced elution concentrations of lead, showing a tendency that the agents having greater amount of amine compound of formula (III) in the mixture of the formulae (I) to (III) lead to more superior performance for treating the element of group 14 or compounds thereof.

Further, comparing the working example 2 with the working examples 3 and 4, the working example 2 had a reduced elution concentration of mercury, which suggests that the agents having greater amount of total amine compounds of formulae (IIIa) and (IIIb) lead to more superior performance for treating the subject element or compounds thereof. It was further indicated that the agents having greater amounts of amine compound of formulae (IIIc) generally led to overall performance which is more superior in respect of treating chromium, mercury and lead as the subject elements or compounds thereof. It was also confirmed that the incinerated ashes treated in the working examples 1 to 4 had amounts below the landfill standard for all of the cadmium (group 12), arsenic (group 15) and selenium (group 16). Moreover, the elutes of untreated incinerated ash, the working examples, the comparative examples, and the blank test all had a pH of 12.4, which is greater than the pH of 11.5 and therefore it was indicated the heavy metal treatment agent of the present invention can treat the elements of groups 6 to 16 or compounds thereof.

In view of the above, it was suggested that the heavy metal treatment agent of the present invention was excellent in treating the elements of groups 6 to 16 or compounds thereof.

### (Wastewater treatment test)

The following reagents were used to prepare test solutions to be treated. Hydrochloric acid solution or sodium hydroxide solution was used for pH adjustment during the preparation of the test solution.
Chromium (III) chloride hexahydrate (manufactured by KANTO CHEMICAL CO.)
Cobalt (II) chloride hexahydrate (manufactured by FUJIFILM Wako Pure Chemical Corporation)
Iron (III) chloride hexahydrate (manufactured by KANTO CHEMICAL CO.)
Copper (II) chloride dihydrate (manufactured by KOKUSAN CHEMICAL Co., Ltd.)
Zinc chloride (II) (manufactured by KOKUSAN CHEMICAL Co., Ltd)
Aluminum sulfate 14-18 Water (manufactured by FUJIFILM Wako Pure Chemical Corporation)
Cadmium (II) chloride (manufactured by FUJIFILM Wako Pure Chemical Corporation)
Lead chloride (II) (manufactured by KANTO CHEMICAL CO.)
Mercury chloride (II) (manufactured by KANTO CHEMICAL CO.)
Arsenic oxide (III) (manufactured by KANTO CHEMICAL CO.)
Sodium selenite (manufactured by FUJIFILM Wako Pure Chemical Corporation)
Potassium dichromate (manufactured by FUJIFILM Wako Pure Chemical Corporation)

In addition, the following flocculants were used.
Aluminium sulfate aqueous solution (manufactured by TAIMEI CHEMICALS Co.,Ltd)
38% ferric chloride aqueous solution (manufactured by Hayashi Pure Chemical Ind., Ltd.)
Polymer flocculant (Anionic polymer flocculant: Miyo-floc AP-800 (manufactured by Miyoshi Oil & Fat Co., Ltd.))

### [Treatment of wastewater containing copper]

An aqueous solution containing 50mg/L of copper (group 11) was prepared as a test wastewater (subject water solution) which was subjected to wastewater treatments as indicated below and evaluated.

The heavy metal treatment agent was added to 200mL of the wastewater while performing stirring at 200 rpm at the additive amounts as shown in Table 2 such that the content percentages of dithiocarbamate group of the added heavy metal treatment agent to the wastewater were of the same level, and it was subsequently stirred for 10 minutes. After the stirring was finished, the mixture was allowed to stand for 10 minutes, and all the flocs were filtered out with a glass filter (GA-100, ADVANTEC TOYO KAISHA, LTD) which had been weighed beforehand, and the copper concentration of the filtrate was measured. The concentrations of copper in the filtrates (treatment solutions) were measured using a ICP atomic emission spectrometer. The separated flocs together with the filter were dried at 105°C for two hours, which was then weighed to determine the dried weight of the flocs based on the difference in weight. The results are as shown in Table 2.

**[Table 2]**

| | Working example | | | | Comparative example | | | |
|---|---|---|---|---|---|---|---|---|
| | 5 | 6 | 7 | 8 | 5 | 6 | 7 | 8 |
| Heavy metal treatment agent | A | B | C | D | E | F | G | H |
| Concentration (wt.%) of heavy metal treatment agent | 40.0 | 40.0 | 40.0 | 40.0 | 40.0 | 40.0 | 40.0 | 40.0 |
| Content percentage (wt.%) of dithiocarbamate group in heavy metal treatment agent | 18.7 | 20.9 | 20.2 | 21.2 | 23.7 | 23.0 | 19.4 | 21.9 |
| Additive amount (mg/L) of heavy metal treatment agent | 535 | 478 | 495 | 472 | 422 | 435 | 515 | 457 |
| Content amount (mg/L) of dithiocarbamate group of added heavy metal treatment agent | 100 | 100 | 100 | 100 | 100 | 100 | 100 | 100 |
| Copper concentration (mg/L) in filtrate | 1.6 | 0.26 | 0.40 | 1.2 | 2.2 | 2.0 | 7.4 | 7.1 |
| Dry weight (mg) of flocs | 44 | 42 | 43 | 40 | 30 | 36 | 38 | 35 |

As shown in Table 2, when the heavy metal treatment agent was added such that the content percentages of dithiocarbamate group of the added heavy metal treatment agent were of the same level, the working examples 5 to 8 exhibited lower eluation concentrations of copper (group 11) in the filtrate compared to those of the comparative examples 5 to 8, which therefore indicates that the heavy metal treatment agent of the present invention exhibits enhanced performance in treating the elements of group 11. That is, a dithiocarbamate containing any amine compound of any one or more formulae (I) to (III), or a dithiocarbamate containing an amine compound of formula (III) showed superior performance for treating the elements of group 11 or compounds thereof.

Further, as was the case with the treatment of the incinerated ash, it was suggested that the dithiocarbamates of the compound of the formula (III) having a combination of linear and cyclic structures in one molecule of the working examples 5 to 8 had superior performances for treating the element of group 11 or compounds thereof compared with the comparative examples 5 and 6 that are dithiocarbamates of amine compounds consisting only of liner structure per molecule, the comparative example 7 that is a dithiocarbamate of an amine compound consisting only of a cyclic structure per molecule and the comparative example 8 that is a mixture of dithiocarbamates with an amine compound consisting only of liner structure and an amine compound consisting only of cyclic structure per molecule.

Comparing the working examples 6 to 8 with the working example 5, the working examples 6 to 8 exhibited more reduced elution concentrations of copper in the filtrate, and the dithiocarbamate showed superior performance for treating the elements of copper (group 11) or compounds thereof when the dithiocarbamate contains any one or more amine compounds of the formulae (IIIa), (IIIb) and (IIIc), particularly when the compounds have not only those of formulae (IIIa) and (IIIb) but also that of formula (IIIc); or when the dithiocarbamate contains any one or more amine compounds of the formulae (I), (II) and (III), particularly when the compounds have not only those of formulae (Ia), (IIa), (IIIa) and (IIIb) but also that of formula (IIIc).

Comparing the working examples 6 and 7 with the working example 8, the working examples 6 and 7 had reduced concentrations of copper in the filtrate, thus showing a tendency that the agents having greater amount of amine compound of formula (III) in the mixture of the formulae (I) to (III) lead to more superior performance for treating the element of group 11 or compounds thereof.

Further, comparing the working example 6 with the working examples 7 and 8, the working example 6 had a more reduced concentration of copper in the filtrate, which suggests that the agents having greater amounts of total amine compounds of formulae (IIIa) and (IIIb) lead to more superior performance for treating the subject element or compounds thereof.

As to the floc formation capacity, the working examples 5 to 8 exhibited dried floc weight of 40mg or more while the comparative examples 5 to 8 exhibited those of less than 40mg.

It was thus confirmed that the dithiocarbamate of the amine compound containing any one or more formulae (I), (II) and (III) or the dithiocarbamate of the amine compound containing the formula (III) has superior property for forming flocs with the subject elements or compounds thereof.

### [Treatment tests for various elements]

Test wastewater for each element listed in Table 3 was prepared as the test wastewater (subject water solution). To 200 mL of this test wastewater was added the heavy metal treatment agent B while performing stirring at 200 rpm such that the added amounts were as shown in Table 3, and it was subsequently stirred for 10 minutes. The pH was then adjusted to pH 8 using a sodium hydroxide solution. A polymer flocculant was then added and stirred for 2 minutes at a rotation speed of 20 rpm. After the stirring was finished, it was allowed to stand for 10 minutes, and the flocs were filtered out with a filter paper (Class 5A specified in JIS P 3801). The concentrations of the respective elements in the wastewater and filtrate were measured using a ICP atomic emission spectrometer. The results are as shown in Table 3.

**[Table 3]**

| | Working example | | | | |
|---|---|---|---|---|---|
| | 9 | 10 | 11 | 12 | 13 |
| Element (group) | Cr (6) | Mn (7) | Fe (8) | Co (9) | Al (13) |
| Heavy metal treatment agent | B | B | B | B | B |
| Concentration (wt.%) of heavy metal treatment agent | 40.0 | 40.0 | 40.0 | 40.0 | 40.0 |
| Content percentage (wt.%) of dithiocarbamate group in heavy metal treatment agent | 20.9 | 20.9 | 20.9 | 20.9 | 20.9 |
| Additive amount (mg/L) of heavy metal treatment agent | 48 | 120 | 120 | 120 | 120 |
| Content percentage (mg/L) of dithiocarbamate group of added heavy metal treatment agent | 10 | 25 | 25 | 25 | 25 |
| pH in test wastewater after adjustment | 8 | 8 | 8 | 8 | 8 |
| Additive amount (mg/L) of polymer flocculant | 2 | 2 | 2 | 2 | 2 |
| Test wastewater concentration (mg/L) | 9.8 | 11 | 7.6 | 10 | 9.1 |
| Element concentration (mg/L) in filtrate | 0.50 | 4.8 | 0.83 | 2.7 | 0.25 |

As shown in Table 3, since the treatments with the heavy metal treatment agent of the present invention reduced concentrations of the respective elements in wastewater, it was therefore confirmed that the heavy metal treatment agent of the present invention can be used to suitably treat wastewater containing the elements of groups 6 to 13.

### [Treatment of wastewater containing nickel and zinc]

A test wastewater containing 10mg/L of nickel (group 10) and 10mg/L of zinc (group 12) was prepared beforehand.

As to the working example 14 and the comparative examples 9 and 10, the heavy metal treatment agent was added to 200mL of the above-mentioned wastewater while performing stirring at 200 rpm at the additive amounts as shown in Table 4 such that the content percentages of dithiocarbamate group of the added heavy metal treatment agent to the wastewater were of the same level, and it was subsequently stirred for 10 minutes. The pH was then adjusted to pH 8 using a sodium hydroxide solution. A polymer flocculant was then added and stirred for 2 minutes at a rotation speed of 20 rpm. After the stirring was finished, it was allowed to stand for 10 minutes, and the flocs were filtered out with a filter paper, and concentrations of nickel and zinc in the filtrate were measured. The concentrations of nickel and zinc in the filtrate were measured using a ICP atomic emission spectrometer. The same operations as shown above were performed for the working example 15 except that a solution of aluminium sulfate was added as an inorganic flocculant at the additive amount as listed in Table 4 and then stirred for five minutes after the heavy metal treatment agent was added and stirred. The results are as shown in Table 4.

**[Table 4]**

| | Working example | | Comparative example | |
|---|---|---|---|---|
| | 14 | 15 | 9 | 10 |
| Heavy metal treatment agent | B | B | F | G |
| Concentration (wt.%) of heavy metal treatment agent | 40.0 | 40.0 | 40.0 | 40.0 |
| Content percentage (wt.%) of dithiocarbamate group in heavy metal treatment agent | 20.9 | 20.9 | 23.0 | 19.4 |
| Additive amount (mg/L) of heavy metal treatment agent | 215 | 215 | 196 | 232 |
| Content percentage (mg/L) of dithiocarbamate group of added heavy metal treatment agent | 45 | 45 | 45 | 45 |
| Additive amount (mg/L) of aluminium sulfate | - | 300 | - | - |
| pH in test wastewater after adjustment | 8 | 8 | 8 | 8 |
| Additive amount (mg/L) of polymer flocculant | 2 | 2 | 2 | 2 |
| Nickel concentration (mg/L) in filtrate | <0.05 | <0.05 | 9.8 | 0.07 |
| Zinc concentration (mg/L) in filtrate | 0.32 | <0.05 | 8.6 | 0.80 |

Table 4 shows that the nickel and zinc concentrations in the filtrate of the working example 14 were lower than those of the comparative examples 9 and 10, and the heavy metal treatment agent of the present invention had an enhanced property for treating the elements of groups 10 and 12 or compounds thereof while the working example 15 using the inorganic flocculant led to a further decreased concentration of zinc after the treatment, which therefore indicates that a combined use of the heavy metal treatment agent of the present invention with a polymer flocculant and an inorganic flocculant improves efficiency for treating the elements of groups 10 and 12 or compounds thereof by means of the heavy metal treatment agent of the present invention.

It is also indicated that the treatment using the heavy metal treatment agent of the present invention can be applied to wastewater from a plating plant.

### [Treatment 1 of wastewater containing combined elements]

A test wastewater containing chromium (Group 6) at the concentration of 0.5 mg/L, copper (Group 11) at the concentration of 0.5 mg/L, cadmium (Group 12) at the concentration of 0.2 mg/L, mercury (Group 12) at the concentration of 1.0 mg/L, lead (Group 14) at the concentration of 1.5 mg/L and sodium chloride at the concentration of 50 g/L was prepared beforehand.

To 200 mL of the above test wastewater was added the heavy metal treatment agent while performing stirring at 200 rpm at the added amount as shown in Table 5 such that the content percentages of dithiocarbamate group of the added heavy metal treatment agent to the wastewater were of the same level, and it was subsequently stirred for 10 minutes. After that, 38% aqueous solution of ferric chloride was then added at the additive amount as listed in Table 5 and then stirred for five minutes. The pH was then adjusted to pH 8 using a sodium hydroxide solution. A polymer flocculant was then added and it was stirred for 2 minutes at a rotation speed of 20 rpm. After the stirring was finished, it was allowed to stand for 10 minutes, and the flocs were filtered out with a filter paper, and concentrations of the respective elements in the filtrate were measured. The concentrations of chromium, copper, cadmium and lead in the elute were measured using a ICP atomic emission spectrometer while the concentration of mercury was measured using a mercury analyser. The results are as shown in Table 5.

**[Table 5]**

| | Working example | Comparative example |
|---|---|---|
| | 16 | 11 |
| Heavy metal treatment agent | B | G |
| Concentration (wt.%) of heavy metaltreatment agent | 40.0 | 40.0 |
| Content percentage (wt.%) of dithiocarbamate group in heavy metal treatment agent | 20.9 | 19.4 |
| Additive amount (mg/L) of heavy metal treatment agent | 144 | 155 |
| Content percentage (mg/L) of dithiocarbamate group of added heavy metal treatment agent | 30 | 30 |
| Additive amount (mg/L) of 38% ferric chloride aqueous solution | 200 | 200 |
| pH in test wastewater after adjustment | 8 | 8 |
| Additive amount (mg/L) of polymer flocculant | 2 | 2 |
| Chromium concentration (mg/L) in filtrate | <0.05 | 0.06 |
| Copper concentration (mg/L) in filtrate | <0.05 | <0.05 |
| Cadmium concentration (mg/L) in filtrate | <0.01 | 0.02 |
| Mercury concentration (mg/L) in filtrate | <0.0005 | <0.0005 |
| Lead concentration (mg/L) in filtrate | <0.05 | <0.05 |

As shown in Table 5, in the working example 16, the concentrations of chromium, copper, cadmium, mercury and lead in the wastewater were decreased to the level below the lower limit of quantitation. It was therefore confirmed that the heavy metal treatment agent of the present invention can favourably treat the elements of groups 6, 11, 12 and 14 or compounds thereof. It is also indicated that the treatment using the heavy metal treatment agent of the present invention can be applied for scrubber wastewater from a municipal waste incineration plant.

The results as shown in Table 4 for treating the wastewater containing nickel and zinc and those as shown in Table 5 for treating the wastewater containing combined elements had characteristics which were similar to the results as shown in Table 1 for treating incinerated ash, in Table 2 for treating the wastewater containing copper and in Table 3 of the treatment tests for various elements.

The results as shown above indicate that the heavy metal treatment agent of the present invention reacts well with the elements of groups 6 to 16 or compounds thereof and forms water-insoluble flocculence (flocs) due to its structural characteristics, and has excellent treatment performance and is highly useful.

### [Treatment 2 of wastewater containing combined elements]

A test wastewater containing arsenic (group 15) at the concentration of 0.5 mg/L and selenium (group 16) at the concentration of 0.5 mg/L were prepared beforehand. To 200 mL of the above-mentioned test wastewater was added the heavy metal treatment agents while performing stirring at 200 rpm at the added amount as shown in Table 6 such that the content percentages of dithiocarbamate group of the added heavy metal treatment agent to the wastewater were of the same level, and it was subsequently stirred for 10 minutes. After that, 38% aqueous solution of ferric chloride was then added as an inorganic flocculant at the additive amount as listed in Table 6 and then stirred for five minutes. The pH was then adjusted to pH 8 using a sodium hydroxide solution. A polymer flocculant was then added and it was stirred for 2 minutes at a rotation speed of 20 rpm. After the stirring was finished, it was allowed to stand for 10 minutes, and the flocs were filtered out with a filter paper, and concentrations of the respective elements in the filtrate were measured. The concentrations of arsenic and selenium in the filtrate were measured using a ICP atomic emission spectrometer. The results are as shown in Table 6.

**[Table 6]**

| | Working example | Comparative example |
|---|---|---|
| | 17 | 12 |
| Heavy metal treatment agent | B | E |
| Concentration (wt.%) of heavy metal treatment agent | 40.0 | 40.0 |
| Content percentage (wt.%) of dithiocarbamate group in heavy metal treatment agent | 20.9 | 23.7 |
| Additive amount (mg/L) of heavy metal treatment agent | 96 | 84 |
| Content percentage (mg/L) of dithiocarbamate group of added heavy metal treatment agent | 20 | 20 |
| Additive amount (mg/L) of 38% ferric chloride aqueous solution | 100 | 100 |
| pH in test wastewater after adjustment | 8 | 8 |
| Additive amount (mg/L) of polymer flocculant | 2 | 2 |
| Arsenic concentration (mg/L) in filtrate | <0.05 | 0.11 |
| Selenium concentration (mg/L) in filtrate | <0.05 | 0.12 |

As shown in Table 6, the working example 17 showed concentrations of arsenic and selenium in the filtrate which were lower than the one of the comparative example 12, and the concentrations of arsenic and selenium in the wastewater were decreased to the levels below the lower limit of quantitation. It was therefore confirmed that the heavy metal treatment agent of the present invention can favourably treat the elements of groups 15 and 16 or compounds thereof. It is also indicated that the treatment using the heavy metal treatment agent of the present invention can be applied for the wastewater of soil treatment.

### [Treatment 1 of wastewater containing hexavalent chromium]

A test wastewater containing 20mg/L of hexavalent chromium (group 6) was prepared beforehand. The heavy metal treatment agent was added to 200mL of the above-mentioned wastewater while performing stirring at 200 rpm at the additive amounts as shown in Table 7 such that the content percentages of dithiocarbamate group of the added heavy metal treatment agent to the wastewater were of the same level, and it was subsequently stirred for 10 minutes. A polymer flocculant was then added and it was stirred for 2 minutes at a rotation speed of 20 rpm. After the stirring was finished, it was allowed to stand for 10 minutes, and the flocs were filtered out with a filter paper, and concentrations of hexavalent chromium in the filtrate was measured. The concentrations of hexavalent chromium in the filtrate were measured using absorption spectrophotometry in accordance with diphenylcarbazide absorption photometry prescribed in JIS K 0102 65.2.1. The results are as shown in Table 7.

**[Table 7]**

| | Working example | Comparative example |
|---|---|---|
| | 18 | 13 |
| Heavy metal treatment agent | B | E |
| Concentration (wt.%) of heavy metal treatment agent | 40.0 | 40.0 |
| Content percentage (wt.%) of dithiocarbamate group in heavy metal treatment agent | 20.9 | 23.7 |
| Additive amount (mg/L) of heavy metal treatment agent | 957 | 844 |
| Content percentage (mg/L) of dithiocarbamate group of added heavy metal treatment agent | 200 | 200 |
| Additive amount (mg/L) of polymer flocculant | 2 | 2 |
| Hexavalent chromium concentration (mg/L) in filtrate | <0.05 | 1.88 |

As shown in Table 7, the working example 18 showed a concentration of hexavalent chromium in the filtrate which was lower than the one of the comparative example 13, which therefore indicates that the heavy metal treatment agent of the present invention can favourably treat the elements of group 6 or compounds thereof. It is also indicated that the treatment using the heavy metal treatment agent of the present invention can be applied to hexavalent chromium-containing wastewater from a plating plant.

### [Treatment 2 of wastewater containing hexavalent chromium]

A test wastewater containing hexavalent chromium (group 6) at the concentration of 20mg/L was prepared beforehand. The heavy metal treatment agent was added to 200mL of the above-mentioned wastewater while performing stirring at 200 rpm at the additive amounts as shown in Table 8 such that the content percentages of dithiocarbamate group of the added heavy metal treatment agent to the wastewater were of the same level, and it was subsequently stirred for 10 minutes. After that, 38% aqueous solution of ferric chloride was added at the additive amount as listed in Table 8 and then stirred for five minutes. The pH was then adjusted to pH 8 using a sodium hydroxide solution. A polymer flocculant was then added and it was stirred for 2 minutes at a rotation speed of 20 rpm. After the stirring was finished, it was allowed to stand for 10 minutes, and the flocs were filtered out with a filter paper, and concentrations of hexavalent chromium in the filtrate was measured. The concentrations of hexavalent chromium in the filtrate were measured using absorption spectrophotometry in accordance with diphenylcarbazide absorption photometry prescribed in JIS K 0102 65.2.1 while the concentration of chromium therein was measured using a ICP atomic emission spectrometer. The operations similar to those as described above were performed for the working example 20 and the comparative example 15 except that no polymer flocculant was added. The results are as shown in Table 8.

**[Table 8]**

| | Working example | | Comparative example | |
|---|---|---|---|---|
| | 19 | 20 | 14 | 15 |
| Heavy metal treatment agent | B | B | E | E |
| Concentration (wt.%) of heavy metal treatment agent | 40.0 | 40.0 | 40.0 | 40.0 |
| Content percentage of dithiocarbamate group in heavy metal treatment agent (wt.%) | 20.9 | 20.9 | 23.7 | 23.7 |
| Additive amount (mg/L) of heavy metal treatment agent | 957 | 957 | 844 | 844 |
| Content percentage (mg/L) of dithiocarbamate group of added heavy metal treatment agent | 200 | 200 | 200 | 200 |
| Additive amount (mg/L) of 38% ferric chloride aqueous solution | 500 | 500 | 500 | 500 |
| pH in test wastewater after adjustment | 8 | 8 | 8 | 8 |
| Additive amount (mg/L) of polymer flocculant | 2 | | 2 | |
| Hexavalent chromium concentration (mg/L) in filtrate | <0.05 | <0.05 | 1.55 | 1.61 |
| Chromium concentration (mg/L) in filtrate | <0.05 | 0.06 | 1.63 | 1.89 |

Table 8 shows that the hexavalent chromium concentration and chromium concentration in the filtrates of the working examples 19 and 20 were lower than those of the comparative examples 14 and 15, which therefore shows that a combined usage of an inorganic flocculant allows the heavy metal treatment agent of the present invention to favourably treat the element of groups 6 or compound thereof irrespective of the usage of a polymer flocculant. The working example 19 with polymer and inorganic flocculants exhibited a further reduction in the chromium concentration after the treatment, which therefore shows that a combined usage of polymer and inorganic flocculants allows the heavy metal treatment agent of the present invention to further improve the efficiency of treating the element of groups 6 or compound thereof. It is also indicated that the treatment using the heavy metal treatment agent of the present invention by the system as shown above can be applied for chemical industrial wastewater that contains hexavalent chromium.

## Claims

1. A heavy metal treatment agent comprising at least one dithiocarbamate of one or more amine compounds represented by any of formulae (I) to (III): 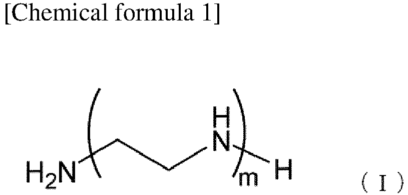
wherein m represents an integer of 3 to 6; 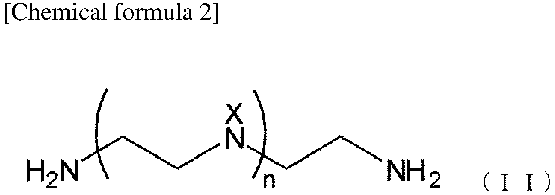
wherein each of the n Xs independently represents a hydrogen atom or a 2-aminoethyl group, at least one X is a 2-aminoethyl group, n is an integer of 1 to 3 and the total number of nitrogen atoms is 4 to 8; and 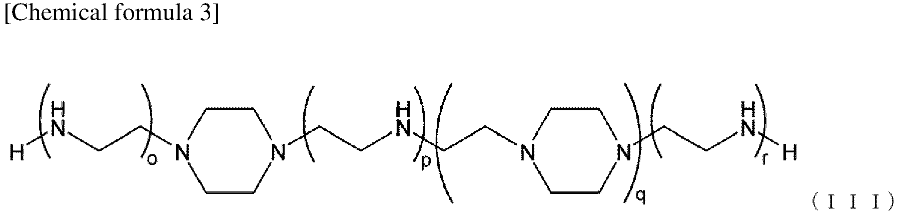
wherein o is an integer of 0 to 2, p is 0 or 1, q is 0 or 1, r is an integer of 0 to 3, the sum of o, p and r is greater than or equal to 1, and the total number of nitrogen atoms is 3 to 7.

2. The heavy metal treatment agent according to claim 1, wherein the one or more amine compounds comprise an amine compound represented by the formula (III).

3. The heavy metal treatment agent according to claim 2, wherein the one or more amine compounds comprise, as an amine compound represented by the formula (III), at least one species selected from amine compounds represented by the following formulae (IIIa), (IIIb) and (IIIc):

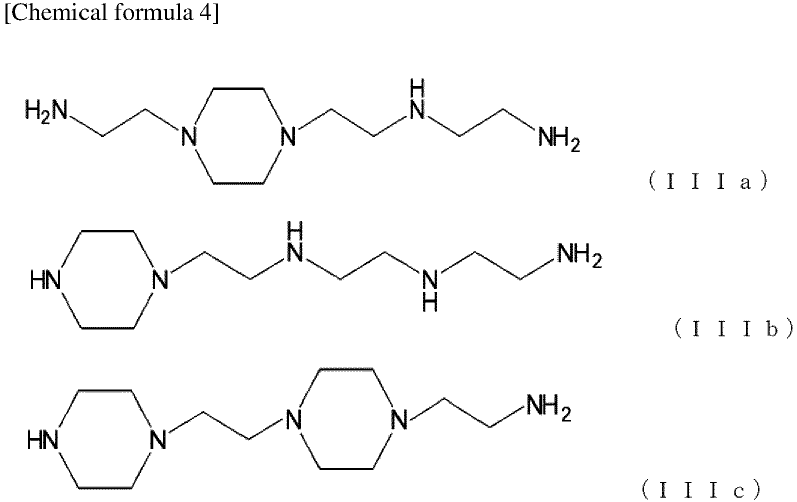

4. The heavy metal treatment agent according to claim 2 or 3, wherein the one or more amine compounds comprise, as amine compounds represented by the formula (III), both of the amine compounds represented by the following formulae (IIIa) and (IIIb):

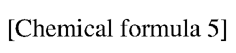

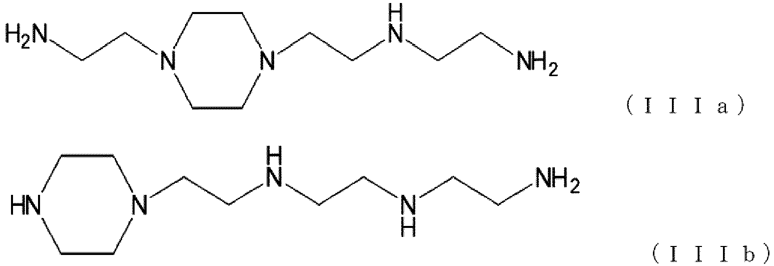

5. The heavy metal treatment agent according to claim 4, wherein the one or more amine compounds further comprise, as an amine compound represented by the formula (III), an amine compound represented by the following formula (IIIc):

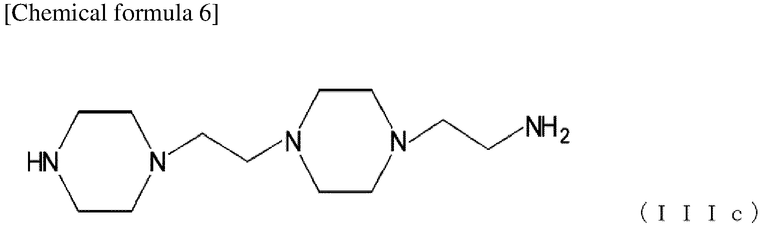

6. The heavy metal treatment agent according to any one of claims 1 to 5, wherein the one or more amine compounds comprise all of the amine compounds represented by the formulae (I) to (III).

7. The heavy metal treatment agent according to claim 6, wherein the one or more amine compounds comprise, as amine compounds represented by any of formulae (I) to (III), all of the amine compounds represented by the following formulae (Ia), (IIa), (IIIa) and (IIIb).

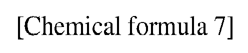

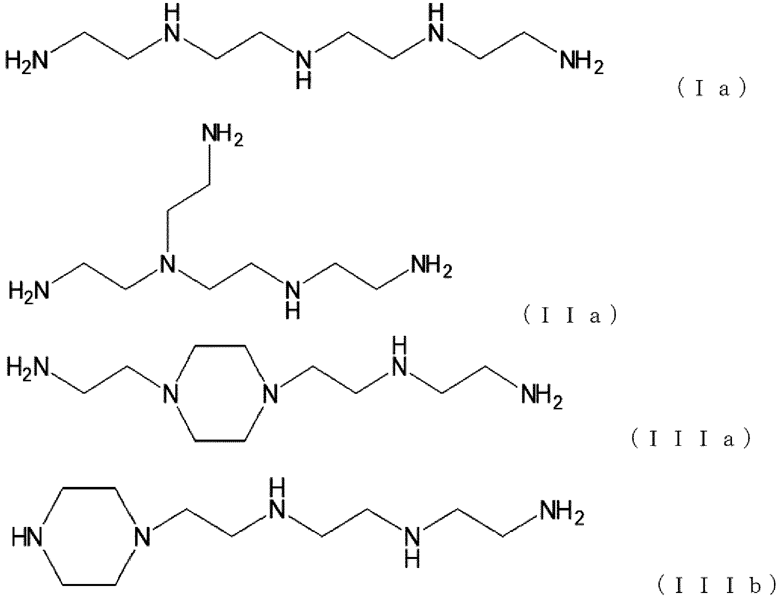

8. The heavy metal treatment agent according to claim 7, wherein the one or more amine compounds further comprise, as an amine compound represented by the formula (III), an amine compound represented by the following formula (IIIc):

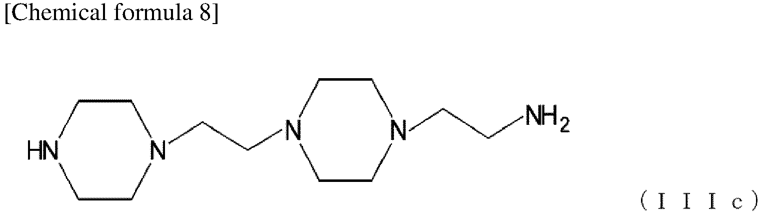

9. The heavy metal treatment agent according to any one of claims 1 to 8, wherein the one or more amine compounds comprise an amine compound represented by the formula (III) in an amount of 10.0% or more and 80.0% or less.

10. The heavy metal treatment agent according to any one of claims 1 to 9, wherein the one or more amine compounds comprise, as amine compounds represented by the formula (III), both of the amine compounds represented by the following formulae (IIIa) and (IIIb): 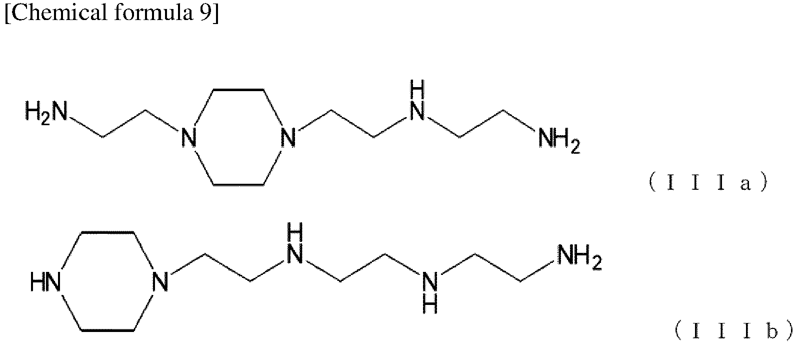 wherein the total amount of the amine compounds represented by the formulae (IIIa) and (IIIb) is 10.0% or more and 50.0% or less.

11. The heavy metal treatment agent according to any one of claims 1 to 10, wherein the one or more amine compounds comprise an amine compound represented by the formula (II) in an amount of 5.0% or more and 30.0% or less.

12. The heavy metal treatment agent according to any one of claims 1 to 11, wherein the dithiocarbamate is a sodium salt of dithiocarbamate.

13. The heavy metal treatment agent according to any one of claims 1 to 12, wherein the heavy metal treatment agent is for treating elements of groups 6 to 16 of the periodic table or compounds thereof.

14. A method for treating incinerated ash containing any one or more elements of groups 6, 12 and 14 of the periodic table or compounds thereof, wherein the method comprises a step of adding the heavy metal treatment agent according to any one of claims 1 to 13 into the incinerated ash.

15. The method for treating incinerated ash according to claim 14, wherein an eluate of the incinerated ash of the experiment as set forth in Japan Environment Agency Notification No. 13 has a pH of 11.5 or more.

16. A method for treating wastewater containing any one or more elements of groups 6 to 16 of the periodic table or compounds thereof, wherein the method comprises a step of adding: the heavy metal treatment agent according to any one of claims 1 to 13; and an iron-based inorganic flocculant and/or an aluminium-based inorganic flocculant into a subject water solution.

17. A method for treating wastewater containing any one or more elements of groups 6 to 16 of the periodic table or compounds thereof, wherein the method comprises a step of adding: the heavy metal treatment agent according to any one of claims 1 to 13; and a polymer flocculant into a subject water solution.

18. A method for treating wastewater containing any one or more elements of groups 6 to 16 of the periodic table or compounds thereof, wherein the method comprises a step of adding: the heavy metal treatment agent according to any one of claims 1 to 13; a polymer flocculant; and an iron-based inorganic flocculant and/or an aluminium-based inorganic flocculant into a subject water solution.
